# EUROPÄISCHE PATENTSCHRIFT

(11) **EP 1 736 340 B1**
(45) Veröffentlichungstag und Bekanntmachung des Hinweises auf die Patenterteilung: **26.03.2008**
(21) Anmeldenummer: 06012829.5
(22) Anmeldetag: 22.06.2006
(51) Int. Cl.: B60J 7/20

(54) **Cabrioletfahrzeug mit einer Trennwand**
Cabriolet vehicle with a dividing wall
Véhicule cabriolet avec une paroi de séparation

(30) Priorität: 24.06.2005 DE 102005029693
(43) Veröffentlichungstag der Anmeldung: 27.12.2006
(73) Patentinhaber: Wilhelm Karmann GmbH, 49084 Osnabrück (DE)
(72) Erfinder: Hornung, Christian, 49504 Wersen (DE); Tobergte, Thomas, 49170 Hagen a.T.W. (DE); Schober, Jens, 49393 Lohne (DE); Gutendorf, Peter, 49088 Osnabrück (DE); Rußke, Klaus, 49143 Bissendorf (DE); Van Berkum, Wim, 49179 Ostercappeln (DE)

(56) Entgegenhaltungen:
- EP-A- 0 860 312
- WO-A-20/05102756
- DE-A1- 3 829 346
- DE-A1- 10 104 333
- DE-A1- 10 138 669
- DE-C1- 19 636 027
- DE-U1- 20 209 924

## Beschreibung

Die DE 101 38 669 A1 offenbart einen Verdeckkasten, welcher einen Boden aufweist, der den Verdeck- Aufnahmeraum von einem Gepäckraum des Fahrzeugs abteilt, wobei der Verdeckkastenboden zumindest einen verstellbaren Bereich zur Volumenveränderung des Verdeckkastens und des Gepäckraumes aufweist. Der verstellbare Bereich ist von einer biegeschlaffen, jedoch zugfesten Materialbahn gebildet, die bzw. deren Hauptflächenbereich mittels einer Hubeinrichtung zwischen der tiefen Verdeckablage- Position und der hohen Gepäckraum- Nutz- Position verlagerbar ist.

Die DE 202 09 924 U1 offenbart einen Verdeckkasten, welcher eine Trennvorrichtung, die einen Zusatzraum zumindest bereichsweise abgrenzt, und eine Überführeinrichtung aufweist, mittels derer die Trennvorrichtung zwischen einer Verdeckaufnahmestellung und einer Gepäckaufnahmestellung bewegbar ist, wobei die Trennvorrichtung eine biegeschlaffe, zugfeste Materialbahn umfasst. Die Überführeinrichtung enthält eine Spannrolle für die Materialbahn. Eine Führungseinrichtung ist zum Führen der Spannrolle zwischen einer in Fahrtrichtung vorderen, oberen ersten Position und einer in Fahrtrichtung hinteren, unteren zweiten Position vorgesehen, wobei Führungen jeweils an deren in Fahrtrichtung hinterem Ende schwenkbar angeordnet sind. Die Spannrolle wird mit einem umlaufenden Bowdenzug manuell, elektrisch oder hydraulisch angetrieben.

Die EP 0 860 312 A offenbart ein variables Aufnahmefach mit zwei, über eine verstellbare Trennwand volumenveränderlichen Ablageräumen. Die Trennwand ist in einen tiefgestellten Zustand versetzbar, wenn das Fahrzeugdach geöffnet wird. Die Verstellung zwischen einem hochgestellten und tiefgestellten Zustand erfolgt motorisch oder mechanisch.

Die DE 196 36 027 C1 offenbart eine Trennwand zum Unterteilen eines Heckstauraums eines Fahrzeugs, die zur Anpassung an einen erhöhten Stauraumbedarf in eine platzsparende Nichtgebrauchsstellung zusammenlegbar ist, wobei die Trennwand als flexible Rollobahn ausgebildet ist. Die Rollobahn lässt sich im aufgewickelten Zustand an einem Fallstab ergreifen und nach hinten weiter aus dem Rollogehäuse herausziehen. Unter Aufrechterhaltung der Zugkräfte am Fallstab lässt sich dieser händisch mit seinen Endbereichen in zwei Einhängungswiderlager einhängen.

Die DE 101 04 333 A1 offenbart ein Cabriolet- Fahrzeug mit einem in einem Verdeckkasten ablegbaren Dach, wobei der Verdeckkasten durch eine variable Trennvorrichtung abteilbar ist, die zumindest einen beweglichen Plattenkörper enthält. Der Plattenkörper ist über beispielsweise als Elektro- oder als Pneumatikmotoren ausgebildete seitliche Antriebe oder über manuelle Betätigung vertikal beweglich und verbleibt während dieser Bewegung in seiner horizontalen Lage.

Aufgabe der Erfindung ist es, ein gattungsgemäßes Cabrioletfahrzeug derart weiterzubilden, dass die Trennwand einfach handhabbar ist, bei geschlossenem Verdeck das Gepäckvolumen nicht beeinträchtigt und bei geöffnetem Verdeck dessen Platzbedarf nur unwesentlich vergrößert, und durch eine einfache und elementare Bauweise keine Vorrichtungen zum Anheben und Halten der Trennwand benötigt werden.

Die Aufgabe wird mit einem Cabrioletfahrzeug nach Anspruch 1 gelöst.

Die Unteransprüche sind auf vorteilhafte Ausführungsformen und Weiterbildungen der erfindungsgemäßen Trennwand gerichtet.

Insgesamt wird mit der Erfindung eine einfache und kostengünstige Möglichkeit geschaffen, den Gepäckraum eines Cabrioletfahrzeugs bei geschlossenem Verdeck voll zu nutzen, ohne dass störende Strukturen in den Gepäckraum hineinstehen.

Die Erfindung wird im Folgenden anhand schematischer Zeichnungen beispielsweise und in weiteren Einzelheiten anhand bevorzugter Ausführungsformen erläutert.

In den Figuren 1 - 8 stellen dar:
- Fig. 1: einen Teillängsschnitt eines Cabrioletfahrzeugs mit einer erfindungsgemäßen Trennwand bei geschlossenem Verdeck,
- Fig. 2: einen Teillängsschnitt eines Cabrioletfahrzeugs gemäß Fig. 1 bei offenem Verdeck,
- Fig. 3: einen Teillängsschnitt eines Cabrioletfahrzeugs mit einer durch eine Wickelwelle vorgespannten Trennwand bei geschlossenem Verdeck,
- Fig. 4: einen Teillängsschnitt des Cabrioletfahrzeugs gemäß Fig. 3 bei offenem Verdeck,
- Fig. 5: einen Teillängsschnitt eines Cabrioletfahrzeugs bei geschlossenem Verdeck mit einem hohen Gepäckstück im Gepäckraum,
- Fig. 6: einen Teillängsschnitt eines Cabrioletfahrzeugs bei geschlossenem Verdeck mit einem großen Gepäckstück im Gepäckraum,
- Fig. 7: einen Teillängsschnitt eines Cabrioletfahrzeugs bei geschlossenem Verdeck mit einem kleinerem als in Fig. 6 gezeigtem Gepäckstück im Gepäckraum,
- Fig. 8: einen Teillängsschnitt eines Cabrioletfahrzeugs bei offenem Verdeck mit einem gegenüber Fig. 7 kleinerem Gepäckstück im Gepäckraum;

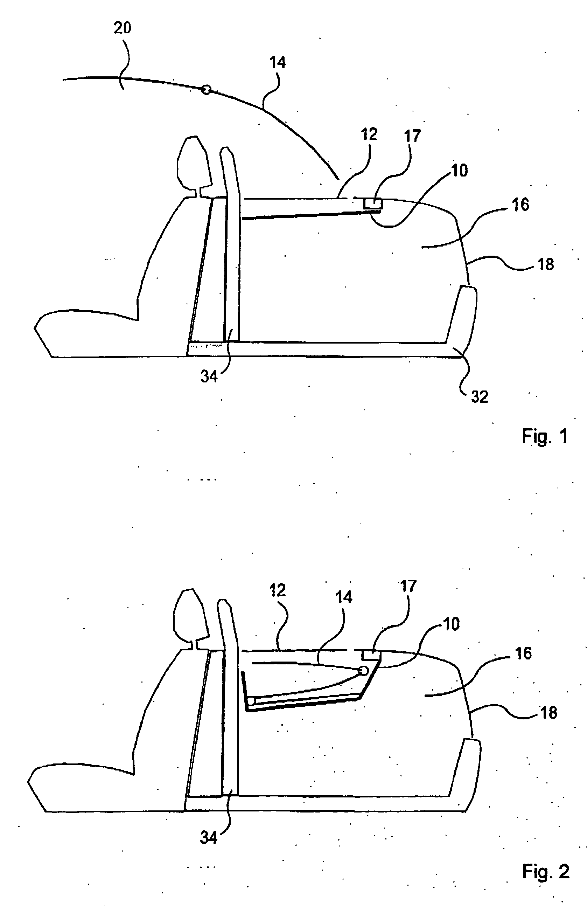

Das in Fig. 1 dargestellte geschlossene Cabrioletfahrzeug weist im vorderen Bereich eines Gepäckraums 16 eine als elastische Folie 10 ausgebildete Trennwand unterhalb eines Verdeckdeckels 12 auf, die den darunter liegenden Gepäckraum 16 nach oben abgrenzt. Die elastische Folie 10 ist mit ihrem Vorderrand an einem Oberrand einer vorderen Gepäckraumtrennwand 34 und mit ihrem Hinterrand an einer Querversteifung 17 befestigt, die quer über den Gepäckraum 16 verläuft.

Im geschlossenen Zustand des Verdecks 14 erstreckt sich die Folie 10 im Wesentlichen flach unterhalb des Verdeckdeckels 12. Die elastische Folie 10, die beispielsweise eine aus einem hochelastischen Latexmaterial besteht, wird bei der Montage vorteilhafterweise vorgespannt, damit sie im geschlossenen Zustand des Verdecks 14 die flache Form gemäß Fig. 1 annimmt.

Für eine einfache Montage und Demontage kann die Folie 10 z.B. längs zumindest eines Teils ihres Randes mit Ösen versehenen sein, die in geeignete Vorsprünge, die sich z.B. an der vorderen Gepäckraumtrennwand 34 und an der oberen Querversteifung 17 des Gepäckraumes 16 befinden, unter Vorspannung der Folie 10 eingehängt werden.

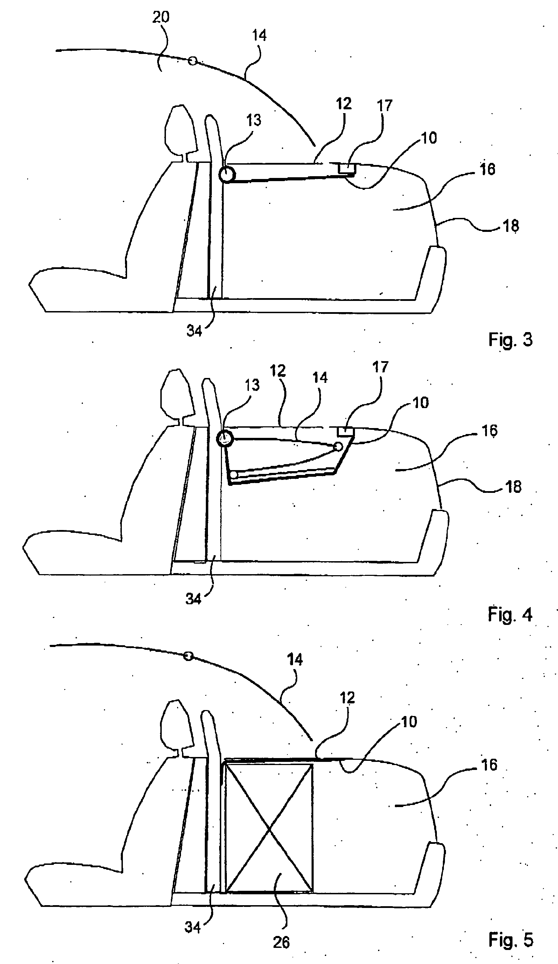

Wegen ihrer geringen Dicke hat die Folie 10 nur ein minimales Eigenvolumen, so dass sie bei geschlossenem Verdeck 14 den Gepäckraum 16 nicht beeinträchtigt. Weiterhin kann sie sich aufgrund ihrer Elastizität nach oben wölben und kann sich somit an die Unterseite des Verdeckdeckels 12 anschmiegen, wie dies in Fig. 5 bei Beladung mit einem hohen Gepäckstück 26 dargestellt ist.

Bei geschlossenem Verdeck steht dem Fahrzeugbenutzer somit der Gepäckraum 16 nahezu vollständig zur Verfügung, da dieser weder durch die Trennwand, noch durch die Befestigung der Trennwand in seiner Größe beeinträchtigt wird.

Fig. 2 zeigt ein Cabrioletfahrzeug im offenen Zustand, d.h. mit zusammengefaltetem und verstautem Verdeck 14.

Um das Verdeck in diesen Zustand zu überführen, wird zunächst der hintere Teil des Verdecks 14 in an sich bekannter Weise derart nach oben geklappt, dass der Verdeckdeckel 12 nach oben in eine etwa senkrechte Stellung geschwenkt werden kann. Durch einen nicht näher beschriebenen Mechanismus wird das Verdeck 14 dann gegen die elastische Folie 10 abgesenkt und zusammen mit ihr in den Gepäckraum hinein abgesenkt. Nach vollständigem Öffnen und Zusammenfalten des Verdecks 14 in die in Fig. 2 gezeigte Stellung wird der Verdeckdeckel 12 wieder in seine mit der Gepäckraumklappe 18 bündige Ausgangsstellung gebracht und schließt ein durch die verformte Folie 10 gebildetes Aufnahmefach des Verdecks 14.

Es versteht sich, dass der Verdeckdeckel 12 ein zur Funktion der Trennwand bzw. Folie 10 nicht notwendiges Bauteil ist.

Nach Absenken des Verdecks 14 gegen die Trennwand 10 und Schließen und Verriegeln des Verdeckdeckels 12, kann der zum Öffnen des Verdecks 14 benötigte Antrieb abgeschaltet werden. Die elastische Trennwand 10 drückt das Verdeck dann vorteilhafterweise von unten gegen den Verdeckdeckel 12. Damit gewährleistet die elastische Folie 10, dass eventuelle Freiräume bzw. Spiele, des Verdecks 14 beseitigt werden und das Verdeck klapperfrei aufgenommen ist. Das Verdeck ist weitetmöglich zusammengelegt, so dass der verbleibende Gepäckraum 16 so groß wie möglich bleibt.

Die elastische Folie kann in einer weiteren Ausführungsform, beispielsweise mittels eines Reißverschlusses, eines verschraubten Rahmens, oder sonstwie wasserdicht an dem Fahrzeug angebracht werden, so dass kein Wasser in den Gepäckraum 16 gelangen kann, wenn der Verdeckdeckel 12 nicht wasserdicht abschließt.

In einer weiteren Ausführungsform kann die Trennwand durch eine aufwickelbare Folie 10 ersetzt werden, die nicht zwingend elastisch dehnbar sein muss. Hierzu kann eine nicht näher beschriebene Wickelwelle 13 z.B. an der Gepäckraumtrennwand 34, wie in Fig. 3 gezeigt, befestigt sein. Das andere Ende der Trennwand 10 kann, wie bei der geschilderten Ausführungsform mittels an ihr befindlichen Ösen an geeignete Vorsprünge an einer Querversteifung 17 des Gepäckraumes 16 befestigt sein. Günstigerweise wird die Wickelwelle 13 die Folie 10 in der Schließstellung des Verdecks 14 vorgespannt halten.

Wird das Verdeck 14 geöffnet und in den Gepäckraum 16 hinein bewegt so wird die Folie von der Wickelwelle 13 abgerollt und nimmt das zu verstauenden Verdeck 14 auf. Wird das Verdeck 14 wieder geschlossen, so wird die Folie durch die Wickelwelle 13 wieder aufgerollt und in der Schließstellung des Verdecks 14 vorgespannt gehalten.

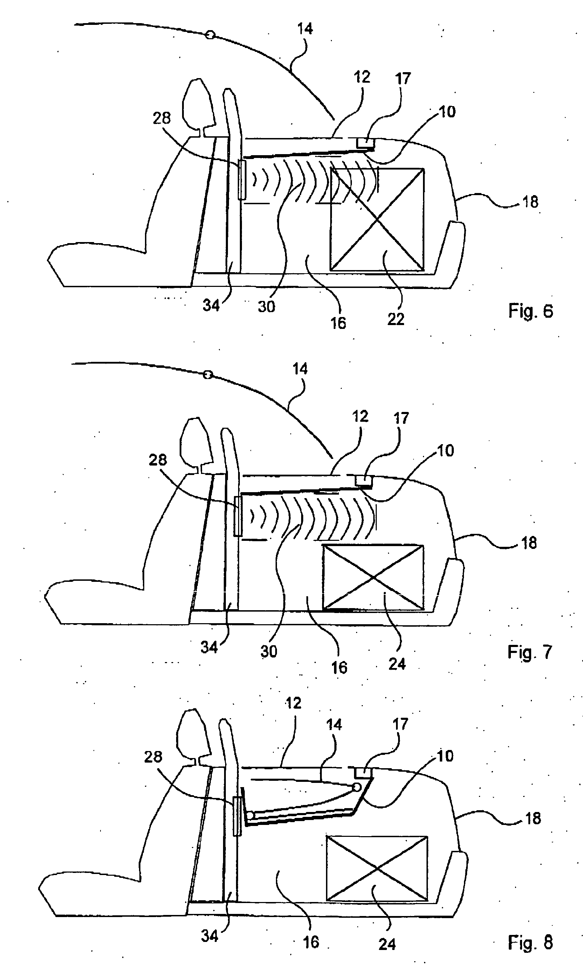

Eine Weiterbildung der oben beschriebenen Ausführungsformen wird in den Figuren 6 bis 8 dargestellt, bei denen mindestens ein ortsfest im Gepäckraum 16 angebrachter Sensor 28 den Bereich den das Verdeck 14 in seinem zusammengelegten Zustand benötigt(im folgenden Sensorbereich 30 genannt) auf Vorhandensein von Gegenständen überprüft. Bei motorisch geöffnetem Verdeck kann auf diese Weise abgefragt werden, ob ein beschädigungsloses Öffnen des Verdecks 14 möglich ist. Im Falle, dass sich Gegenstände in dem Bereich befinden, der für das Verstauen des Verdecks 14 benötigt wird, wird das motorische Öffnen dann beispielsweise verweigert.

Auch bei manuell betätigten Verdecken ist ein Einsatz von Sensoren sinnvoll, da der Fahrzeugbediener z.B. durch eine Warnleuchte oder ein akustisches Signal vor hinderlichen Gegenständen im betreffenden Bereich des Gepäckraums 16 gewarnt werden kann, ohne dass der Gepäckraum 16 vor dem Öffnen des Verdecks überprüft werden muss.

In der Fig. 6 ist ein an der Gepäckraumtrennwand 34 angebrachter Sensor 28 dargestellt. Ein im Gepäckraum 16 befindliches großes Gepäckstück 22 ragt in den Sensorbereich 30 hinein. Bei dieser Anordnung erkennt der Sensor 28 ein Hindernis im Bereich des zu verstauenden Verdecks 14 und gibt ein entsprechendes Steuersignal an eine Kontrolleinheit (nicht dargestellt). Diese Kontrolleinheit kann z.B. das Öffnen des Verdecks 14 blockieren und den Fahrzeugbediener ein entsprechendes Signal geben, dass das Verdeck 14 nicht ohne Beschädigung des Verdecks 14 oder des im Gepäckraum 16 befindlichen Gepäckstücks 22 möglich ist.

Fig. 7 zeigt ein niedrigeres Gepäckstück 24, das sich unterhalb des Sensorbereichs 30 befindet und somit ein Öffnen des Verdecks 14 zulässt. Hierbei würde der Sensor 28 der Kontrolleinheit ein Signal übermitteln, dass der Sensorbereich 30 frei von Gegenständen ist.

Bei einer weiteren Ausführungsform können ein oder mehrere Annäherungs- oder Berührungssensoren an der Folie 10 angebracht werden. Wenn während des Öffnens des Verdecks 14, eine unzulässige Annäherung an oder Berührung mit einem Gegenstand erfolgt, kann ein Signal an eine Kontrolleinheit geliefert werden, die den Vorgang des Öffnens des Verdecks z.B. stoppt.

Alternativ können Kraftsensoren bei zu großem Kraftaufwand bei der Verdecköffnung den Öffnungsprozess unterbrechen. Die Kraft kann durch die Stromaufnahmen eines des verdecköffnenden Aktors festgestellt werden.

### BEZUGSZEICHENLISTE

- 10: Folie
- 12: Verdeckdeckel
- 13: Wickelwelle
- 14: Verdeck
- 16: Gepäckraum
- 17: Querversteifung
- 18: Gepäckraumklappe
- 22: großes Gepäckstück
- 24: kleines Gepäckstück
- 26: hohes Gepäckstück
- 28: Sensor
- 30: Sensorbereich
- 34: wand

## Patentansprüche

1. Cabrioletfahrzeug enthaltend,
einen im Heck angeordneten Gepäckraum (16), dessen vorderer Bereich nach oben durch eine Trennwand (10) abgeschlossen ist, und
ein Verdeck (14), das sich beim Öffnen zusammen mit der Trennwand (10) in den oberen, vorderen Bereich des Gepäckraums (16), hinein bewegt, so dass die Trennwand (10) unter Verkleinerung des Gepäckraums (16) bei voll geöffnetem Verdeck (14) ein vom Gepäckraum (16) getrenntes Aufnahmefach für das zusammengelegte Verdeck (14) bildet und bei geschlossenem Verdeck (14) den in seiner Größe voll nutzbaren Gepäckraum (16) nach oben hin zum Fahrzeuginnenraum abschließt,
**dadurch gekennzeichnet,**
**dass** die Trennwand durch eine in ihre Lage bei geschlossenem Verdeck (14) elastisch vorgespannte verformbare Folie gebildet ist, die durch Anlage an dem beim Öffnen in den vorderen oberen Bereich des Gepäckraums (16) hinein bewegten Verdeck unter Vergrößerung ihrer Fläche in ihre Lage bei voll geöffnetem Verdeck bewegt wird und beim Schließen des Verdecks aufgrund ihrer Vorspannung selbständig in ihre Lage beim geschlossenen Verdeck zurückkehrt.

2. Cabrioletfahrzeug nach Anspruch 1,
**dadurch gekennzeichnet,**
**dass** die Folie (10) zumindest an ihrem vorderen und hinteren Rand am Fahrzeug befestigt und in sich elastisch dehnbar ist.

3. Cabrioletfahrzeug nach Anspruch 1 oder 2,
**dadurch gekennzeichnet,**
**dass** die Folie (10) längs ihres Umfangs wasserdicht mit dem Fahrzeug verbunden ist.

4. Cabrioletfahrzeug nach Anspruch 1 oder 2,
**dadurch gekennzeichnet,**
**dass** die Folie (10) an ihrem vorderen oder hinteren Rand auf einer die Folie (10) vorspannenden Wickelwelle aufgewickelt ist.

5. Cabrioletfahrzeug nach einem der Ansprüche 1 bis 4,
**dadurch gekennzeichnet,**
**dass** ein vorderer Rand der Folie (10) am Oberrand einer den Gepäckraum (16) in Fahrzeuglängsrichtung vom Innenraum des Fahrzeugs trennenden Wand (34) befestigt ist.

6. Cabrioletfahrzeug nach einem der Ansprüche 1 bis 4,
**dadurch gekennzeichnet,**
**dass** ein Hinterrand der Folie (10) an einer oberen Querversteifung des Gepäckraums (16) befestigt ist.

7. Cabrioletfahrzeug nach einem der Ansprüche 1 bis 6,
**gekennzeichnet durch** wenigstens einen Sensor (28) zum Überprüfen, ob der von Trennwand (10) beim Öffnen des Verdecks (14) überstrichene Bereich frei von Gegenständen ist.

8. Cabrioletfahrzeug nach einem der Ansprüche 1 bis 7,
**gekennzeichnet durch** wenigstens einen an der Trennwand (10) angebrachten Sensor (28) zum Erfassen einer Kollision der Trennwand (10) mit Gegenständen im Gepäckraum (16).

## Claims

1. Convertible vehicle comprising
a rearward-disposed luggage space (16), whose forward portion is upwardly enclosed by a separating wall (10), and
a convertible top (14) that moves into the upper, forward portion of the luggage space (16) together with the separating wall (10) when opening, so that the separating wall (10) forms an accommodation compartment, which is separated from the luggage space (16) when the luggage space (16) is reduced by the fully-opened convertible top (14), for the folded-together convertible top (14) and, when the convertible top (14) is closed, the separating wall (10) upwardly separates the luggage space (16), which is usable to its fullest extent, from the passenger compartment,
**characterised in that**
the separating wall is formed by a deformable sheet, which is elastically tensioned in its position when the convertible top (14) is closed, the sheet being moved by abutment on the convertible top, which is moved into the forward, upper portion of the luggage space (16) during opening, while enlarging its surface in its position when the convertible top is fully-opened and, during closing of the convertible top, it autonomously returns into its position when the convertible top is closed due to its tensioning.

2. Convertible vehicle according to claim 1,
**characterized in that**
the sheet (10) is affixed to the vehicle at least at its forward and rearward edge and is elastically stretchable.

3. Convertible vehicle according to claim 1 or 2,
**characterized in that**
the sheet (10) is connected with the vehicle in a water-tight manner along its periphery.

4. Convertible vehicle according to claim 1 or 2,
**characterized in that**
the sheet (10) is wound up at its forward or rearward edge on a winding shaft that tensions the sheet (10).

5. Convertible vehicle according to one of claims 1 to 4,
**characterized in that**
a forward edge of the sheet (10) is affixed to the upper edge of a wall (34) separating the luggage space (16) from the interior compartment of the vehicle in the vehicle longitudinal direction.

6. Convertible vehicle according to one of claims 1 to 4,
**characterized in that**
a rearward edge of the sheet (10) is affixed to an upper, transverse reinforcement of the luggage space (16).

7. Convertible vehicle according to one of claims 1 to 6,
**characterized by** at least one sensor (28) for monitoring whether the area covered by the separating wall (10) during opening of the convertible top (14) is free from objects.

8. Convertible vehicle according to one of claims 1 to 7,
**characterized by** at least one sensor (28) mounted on the separating wall (10) for detecting a collision of the separating wall (10) with objects in the luggage space (16).

## Revendications

1. Véhicule cabriolet comportant:
- un coffre (16), disposé dans l'arrière du véhicule, dont la zone avant est fermée vers la haut par une paroi de séparation (10), et
- une capote (14), qui se déplace, lors de l'ouverture, ensemble avec la paroi de séparation (10), dans la zone avant, supérieure du coffre (16), de manière à ce que la paroi de séparation (10) forme, en réduisant le coffre (16) avec une capote (14) entièrement ouverte, un réceptacle, séparé du coffre (16), pour la capote (14) pliée, et à ce que ladite paroi de séparation (10) ferme, avec une capote (14) fermée, le coffre (16), dont la taille est entièrement utilisable, vers la haut en direction de l'espace intérieur des passagers,
**caractérisé en ce que**
la paroi de séparation est formée par une feuille déformable et précontrainte de façon élastique dans sa position de la capote (14) fermée, laquelle feuille est déplacée dans sa position de la capote entièrement ouverte, par application sur la capote, déplacée dans la zone avant supérieure du coffre (16) lors de l'ouverture, et laquelle feuille retourne dans sa position de la capote fermée, lors de la fermeture de la capote, du fait de sa précontrainte.

2. Véhicule cabriolet selon la revendication 1, **caractérisé en ce que** la feuille (10) est fixée au moins sur son bord avant et arrière au véhicule et est étirable en elle-même de façon élastique.

3. Véhicule cabriolet selon la revendication 1 ou 2, **caractérisé en ce que** la feuille (10) est liée le long de sa circonférence, de façon étanche à l'eau, avec le véhicule.

4. Véhicule cabriolet selon la revendication 1 ou 2, **caractérisé en ce que** la feuille (10) est enroulée à son bord avant ou arrière sur un arbre d'enroulement précontraignant la feuille (10).

5. Véhicule cabriolet selon l'une des revendications 1 à 4, **caractérisé en ce qu'**un bord avant de la feuille (10) est fixé au bord supérieur d'une paroi (34) séparante le coffre (16), en direction longitudinale du véhicule, de l'espace intérieur du véhicule.

6. Véhicule cabriolet selon l'une des revendications 1 à 4, **caractérisé en ce qu'**un bord arrière de la feuille (10) est fixé à un renforcement transversal du coffre (16).

7. Véhicule cabriolet selon l'une des revendications 1 à 6, **caractérisé par** au moins un capteur (28) destiné à vérifier si la zone parcourue par la paroi de séparation (10) lors de l'ouverture de la capote (14) est libérée d'objets.

8. Véhicule cabriolet selon l'une des revendications 1 à 7, **caractérisé par** au moins un capteur (28) fixé sur la paroi de séparation (10) pour détecter une collision de la paroi de séparation (10) avec des objets dans le coffre (16).
